# EUROPÄISCHE PATENTSCHRIFT

(11) **EP 3 507 149 B1**
(45) Veröffentlichungstag und Bekanntmachung des Hinweises auf die Patenterteilung: **02.03.2022**
(21) Anmeldenummer: 17742372.0
(22) Anmeldetag: 17.07.2017
(51) Int. Cl.: B60T 8/17, B60T 8/18, B60T 8/32, B60T 13/26

(54) **VERFAHREN ZUM ELEKTRONISCHEN STEUERN EINER BREMSANLAGE IN EINEM AUTOMATISIERT STEUERBAREN NUTZFAHRZEUG-GESPANN SOWIE ELEKTRONISCH STEUERBARE BREMSANLAGE IN EINEM AUTOMATISIERT STEUERBAREN NUTZFAHRZEUG-GESPANN**
METHOD FOR ELECTRONICALLY CONTROLLING A BRAKE UNIT IN AN AUTOMATICALLY CONTROLLABLE UTILITY VEHICLE COMBINATION, AND ELECTRONICALLY CONTROLLABLE BRAKE UNIT IN AN AUTOMATICALLY CONTROLLABLE UTILITY VEHICLE COMBINATION
PROCÉDÉ DE COMMANDE ÉLECTRONIQUE D'UN ÉQUIPEMENT DE FREINAGE DANS UN ENSEMBLE ATTELÉ À VÉHICULE UTILITAIRE POUVANT ÊTRE COMMANDÉ DE MANIÈRE AUTOMATISÉE AINSI QU'ÉQUIPEMENT DE FREINAGE POUVANT ÊTRE COMMANDÉ ÉLECTRONIQUEMENT DANS UN ENSEMBLE ATTELÉ À VÉHICULE UTILITAIRE POUVANT ÊTRE COMMANDÉ DE MANIÈRE AUTOMATISÉE

(30) Priorität: 31.08.2016 DE 102016010461
(43) Veröffentlichungstag der Anmeldung: 10.07.2019
(73) Patentinhaber: ZF CV Systems Europe BV, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000862
(87) Internationale Veröffentlichungsnummer: WO 2018/041387

(56) Entgegenhaltungen:
- WO-A1-2016/045652
- DE-A1-102014 100 069
- JP-A- 2006 044 624
- US-A1- 2011 005 874

## Beschreibung

Die Erfindung betrifft ein Verfahren zum elektronischen Steuern einer Bremsanlage, insbesondere pneumatische Bremsanlage, in einem automatisiert steuerbaren Nutzfahrzeug-Gespann sowie ein elektronisch steuerbare Bremsanlage, insbesondere pneumatische Bremsanlage, in einem automatisiert steuerbaren Nutzfahrzeug-Gespann.

In Fahrzeug-Gespannen, insbesondere Nutzfahrzeug-Gespannen, bestehend aus einem Zugfahrzeug und einem Anhänger, bei denen im Zugfahrzeug ein elektronisch steuerbares pneumatisches Zugfahrzeug-Bremssystem und im Anhänger ein elektronisch steuerbares Anhänger-Bremssystem (TEBS) zum Einsatz kommen, können in Abhängigkeit eines durch ein Fußbremsventil vorgegebenen Fahrerwunsches oder aber in Abhängigkeit einer automatisiert vorgegebenen Fahrzeug-Soll-Beschleunigung oder Fahrzeug-Soll-Geschwindigkeit Bremsanforderungen sowohl im Zugfahrzeug als auch im Anhänger umgesetzt werden.

Dazu werden von einer Zentral-Steuereinrichtung (ECU) elektronisch Achsmodulatoren des Zugfahrzeuges in Abhängigkeit des Fahrerwunsches oder der automatisierten Vorgabe angesteuert, die dann pneumatisch einen Zugfahrzeug-Bremsdruck an die Zugfahrzeug-Betriebsbremsen im Zugfahrzeug-Bremssystem aussteuern. Gleichzeitig erfolgt über die Zentral-Steuereinrichtung auch eine elektrische Ansteuerung des Anhänger-Bremssystems über eine Anhänger-Steckverbindung, so dass der Anhänger gleichzeitig mit dem Zugfahrzeug in Abhängigkeit der Fahrervorgabe bzw. der automatisierten Vorgabe abgebremst wird.

Um in derartigen Bremsanlagen insbesondere in automatisiert gesteuerten Nutzfahrzeugen und Nutzfahrzeug-Gespannen eine automatisiert ansteuerbare Redundanz auszubilden, die bei einem Defekt in der elektronischen Ansteuerung der Achsmodulatoren und wenn kein Fahrer im Fahrzeug bzw. am Fahrerplatz ist oder der Fahrer unaufmerksam oder mit anderen Dingen beschäftigt ist automatisiert eingreifen kann, sind Lösungen bekannt, die aber eine Vielzahl an zusätzlichen elektrisch ansteuerbaren pneumatischen Komponenten erfordern, durch die der Montage- und Kostenaufwand erhöht wird. Eine Nachrüstbarkeit ist daher nur mit erhöhtem Aufwand möglich.

Die WO 2016/045652 A1 zeigt dazu beispielsweise eine elektropneumatische Bremsanlage mit einem Fußbremsventil, dessen Bremspedalstellung sensiert werden kann und dessen ausgegebener Fußbremsventil-Steuerdruck zum Ansteuern der Achsmodulatoren unabhängig von einer Bremspedalstellung modifiziert werden kann. Dazu ist eine Magnetventileinrichtung mit beispielsweise zwei 3/2-Wegeventilen vorgesehen, die je nach elektronischer Anforderung einen Fußbrems-Eingangsdruck in das Fußbremsventil einleitet. Über ein zusätzliches Halteventil wird der wirkende Fußbrems-Eingangsdruck gehalten. Durch den wirkenden Fußbrems-Eingangsdruck wird im Fußbremsventil pneumatisch ein Steuerkolben mechanisch bewegt, so dass vom Fußbremsventil ein der pneumatischen Betätigung entsprechender Fußbremsventil-Steuerdruck ausgesteuert wird, der als Steuerdruck an die Achsmodulatoren weitergeleitet wird. Dadurch kann im Fehlerfall, d.h. wenn die elektrische Ansteuerung der Betriebsbremsen über eine elektrische Ansteuerung der Achsmodulatoren fehlschlägt, und wenn keine manuelle Betätigung durch den Fahrer vorliegt über das Fußbremsventil und dessen pneumatischen Kanal eine Bremsung bewirkt werden. Somit liegt eine elektronisch gesteuerte, mechano-pneumatische Betätigung des Fußbremsventils vor.

Eine weitere mechanische Betätigung des Fußbremsventils ist beispielsweise in US 7 520 572 B2 und EP 1 730 006 B1 gezeigt. Hierbei ist jeweils ein Verfahren gezeigt, bei dem das Fußbremsventil zusätzlich zum Bremspedal von einer elektronischen Steuereinrichtung betätigt werden kann. Die Bremsanforderung kann zum einen über das Bremspedal auf das Fußbremsventil vorgegeben werden oder aber unabhängig davon über einen Bremsventilaktuator, der zwischen dem Bremspedal und dem Fußbremsventil angeordnet ist. Der Bremsventilaktuator wird durch die elektronische Steuereinrichtung gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Fußbremsventil betätigt wird.

In DE 103 57 373 B4 ist ein elektronisches Bremssystem mit mindestens zwei Bremskreisen gezeigt. Das elektronische Bremssystem weist eine Zentral-Steuereinrichtung auf, die die Gesamtbremswirkung der Betriebsbremsen in den mindestens zwei Bremskreisen in Abhängigkeit einer Vorgabe eines Bremsanforderungsaufnahmemittels, beispielsweise eines Bremspedals bzw. Fußbremsventils, vorgibt. Eine weitere, ebenfalls mit dem Bremsanforderungsaufnahmemittel verbundene autarke Bremskreissteuerung greift ein, wenn die Zentral-Steuereinrichtung ausgefallen ist, wenn diese einen Fehler meldet oder die autarke Bremskreissteuerung einen Fehler in den Signalen von der Zentral-Steuereinrichtung erkennt. In dem Fall steuert die autarke Bremskreissteuerung den ihr zugeordneten Bremskreis selbst, indem es Steuersignale ausgibt, die zu einer entsprechenden Ansteuerung der Betriebsbremsen dieses Bremskreises in Abhängigkeit der Vorgabe des Bremsanforderungsaufnahmemittels führt.

Zum Abbremsen des Nutzfahrzeug-Gespanns durch den Anhänger ist in DE 198 10 642 A1 ein Verfahren zum Stabilisieren des Nutzfahrzeug-Gespanns beschrieben, bei dem in stabilitätskritischen Situationen selbsttätig der Anhänger abgebremst werden kann. Sobald ein sicherheitskritischer Fahrzustand erkannt wurde, werden Anhänger-Steuersignale zur Betätigung der Anhänger-Betriebsbremsen im Anhänger-Bremskreis an eine Anhänger-Steckverbindung zwischen dem Zugfahrzeug und dem Anhänger ausgegeben. Dadurch können in derartigen Situationen Schleuderzustände oder ein Ausbrechen des Anhängers vermieden werden.

In DE 10 2007 020 881 A1 sowie US 6 512 452 B1 ist beschrieben, Anhänger-Steuersignale zum Ansteuern des Anhänger-Bremskreises über eine Anhänger-Steckverbindung, die eine CAN-Schnittstelle oder eine PLC-Schnittstelle (Power-Line Communication) aufweist, von der Zentral-Steuereinrichtung auf den Anhänger zu übertragen, um vom Zugfahrzeug aus eine elektrisch gesteuerte Bremsung des Anhängers bewirken zu können.

Es ist Aufgabe der Erfindung, ein Verfahren zum elektronischen Steuern einer Bremsanlage für ein automatisiert steuerbares Nutzfahrzeug-Gespann anzugeben, mit dem mit wenig Aufwand im Fehlerfall eine sichere und zuverlässige elektronisch gesteuerte Bremsung gewährleistet werden kann. Weiterhin ist Aufgabe der Erfindung, eine elektrisch steuerbare Bremsanlage für ein automatisiert steuerbares Nutzfahrzeug-Gespann bereitzustellen.

Diese Aufgabe wird durch ein Verfahren zum elektronischen Steuern einer Bremsanlage nach Anspruch 1 und einer elektronisch steuerbaren Bremsanlage nach Anspruch 16 gelöst. Bevorzugte Weiterbildungen sind in den Unteransprüchen angegeben.

Erfindungsgemäß wird demnach erkannt, dass es in einem Fahrzeug-Gespann, insbesondere in einem automatisiert steuerbaren Nutzfahrzeug-Gespann, bei einem Ausfall in der elektrischen Ansteuerung von Betriebsbremsen des Fahrzeug-Gespanns - d.h. im Fehlerfall - lediglich darauf ankommt, dass das Fahrzeug sicher in einen abgebremsten Zustand überführt werden kann. Der sichere abgebremste Zustand kann hierbei je nach Fehler und Anwendung eine unmittelbare Abbremsung bis in Stillstand, eine Abstellen auf dem Seitenstreifen oder in einer Nothaltebucht oder eine Übernahme der Bremsfunktion bis zur Reparatur bedeuten. Demnach können Komponenten, die in einem derartigen Fehlerfall nicht zwingend nötig sind, um für ein Abbremsen des Fahrzeug-Gespanns oder für eine geringe Geräuschentwicklung und einen geringen Verschleiß zu sorgen, entfallen, da die Komponenten, die lediglich im Fehlerfall aktiv werden, nicht auf den dauerhaften Betrieb der Bremsanlage abzustimmen sind. Vielmehr ist der Fehlerfall der Ausnahmefall im Betrieb der Bremsanlage.

Erfindungsgemäß ist dazu vorgesehen, nach einem Feststellen, dass eine über ein Anforderungs-Signal automatisiert angeforderte und von einer Zentral-Steuereinrichtung über Achsmodulatoren umzusetzende Bremsung eines Fahrzeug-Gespanns nicht vollständig oder fehlerfrei durch die Betriebsbremsen des Fahrzeug-Gespanns umgesetzt wird oder werden kann, von einer Überwachungseinrichtung ein Anhänger-Redundanz-Steuersignal an ein Anhänger-Bremssystem in einem Anhänger des Fahrzeug-Gespanns auszugeben, aufgrund dessen Anhänger-Betriebsbremsen betätigt werden. Somit wird im Fehlerfall, d.h. bei einem Ausfall oder einem Defekt in der automatisierten elektrischen Ansteuerung der Betriebsbremsen über die Zentral-Steuereinrichtung, eine elektronisch gesteuerte redundante Bremsung durch eine elektrische Ansteuerung des Anhänger-Bremssystems über die Überwachungseinrichtung bewirkt.

Das Anhänger-Bremssystem wird also im Fehlerfall als elektrisch gesteuerter Bremsaktuator verwendet, um das gesamte Fahrzeug-Gespann in einen sicheren Zustand, insbesondere den Stillstand, zu überführen. Demnach kann das erfindungsgemäße Verfahren lediglich dann durchgeführt werden, wenn im Fahrzeug-Gespann auch ein Anhänger mit einem entsprechend funktionsfähigem elektrisch ansteuerbaren Anhänger-Bremssystem vorhanden ist. Die Assistenz-Steuereinrichtung gibt dazu beispielsweise lediglich dann eine automatisierte Anforderung aus, wenn ein solcher Anhänger erkannt wurde.

Dadurch kann in einem automatisiert steuerbaren Fahrzeug-Gespann mit einer Bremsanlage, vorzugsweise pneumatische Bremsanlage, zusätzlich zu einer vom Fahrer über ein Fußbremsventil manuell steuerbaren pneumatischen Redundanz eine elektrisch steuerbare Redundanz ausgebildet werden, so dass auch dann, wenn der Fahrer nicht am Platz oder unaufmerksam ist eine sichere Bremsung gewährleistet werden kann.

Dazu ist lediglich ein Nachrüsten oder der Einbau der Überwachungseinrichtung nötig, die erfindungsgemäß in einer Datenleitung vor einem die angeforderte Bremsung im Anhänger-Bremssystem umsetzenden Anhänger-Achsmodulator angeordnet ist. Die Überwachungseinrichtung überwacht und plausibilisiert dabei, ob das automatisiert vorgegebene Anforderungs-Signal fehlerfrei umgesetzt wird oder werden kann, wobei dazu die Funktionsfähigkeit der Zentral-Steuereinrichtung sowie einer das automatisierte Anforderungs-Signal ausgebenden Assistenz-Steuereinrichtung als auch die Fehlerhaftigkeit der von der Zentral-Steuereinrichtung sowie der Assistenz-Steuereinrichtung ausgegebenen Signale, über die die pneumatische Bremsanlage im Normalbetrieb elektrisch gesteuert wird, geprüft wird.

Dazu kann beispielsweise vorgesehen sein, zu prüfen, ob das Anforderungs-Signal, das eine Fahrzeug-Soll-Beschleunigung und/oder eine Fahrzeug-Soll-Geschwindigkeit überträgt, und/oder Zugfahrzeug-Steuersignale und Anhänger-Steuersignale, die von der Zentral-Steuereinrichtung zur Steuerung der Achsmodulatoren im Zugfahrzeug und im Anhänger ausgegeben werden, vollständig und fehlerfrei übertragen werden oder diese beispielsweise Unterbrechungen und nicht-vorgesehene Sprünge aufweisen, d.h. der Signalverlauf nicht monoton ist oder außerhalb der physikalisch sinnvollen Grenzen liegt. Derartige Signalfehler führen dazu, dass die über das Anforderungs-Signal übertragenen Anforderungen von der pneumatischen Bremsanlage im Fahrzeug-Gespann nicht vollständig oder fehlerfrei umgesetzt werden können, oder deuten auf einen internen Fehler der Assistenz-Steuereinrichtung hin, die das Anforderungs-Signal ausgegeben hat.

Alternativ oder ergänzend kann vorgesehen sein, zu prüfen, ob eine tatsächlich vorliegende Fahrzeug-Ist-Beschleunigung und/oder eine Fahrzeug-Ist-Geschwindigkeit innerhalb einer Toleranz der automatisiert angeforderten Fahrzeug-Soll-Beschleunigung bzw. der Fahrzeug-Soll-Geschwindigkeit entspricht. Ist dies beispielsweise nach einer bestimmten Zeitdauer nicht der Fall, kann auf einen Fehler in der elektrischen Ansteuerung der Bremsanlage geschlossen werden, der von einer Eigendiagnose nicht erkannt wurde und aufgrund dessen die automatisierten Anforderungen nicht vollständig oder fehlerfrei umgesetzt werden kann.

Außerdem kann von der Zentral-Steuereinrichtung oder der Assistenz-Steuereinrichtung über ein Diagnose-Signal auch auf einen in einer Eigendiagnose festgestellten Defekt in der jeweiligen Steuereinrichtung oder den angeschlossenen Sensoren und Aktuatoren hingewiesen werden. Sobald die Überwachungseinrichtung diese Information erhält, kann diese darauf schließen, dass eine elektrische Ansteuerung von den jeweiligen Steuereinrichtungen nicht mehr sicher und zuverlässig möglich ist, so dass die automatisierten Anforderungen nicht mehr vollständig oder fehlerfrei umgesetzt werden können. Dabei kann die Überwachungseinrichtung auch feststellen, ob die Zentral-Steuereinrichtung und/oder die Assistenz-Steuereinrichtung überhaupt Diagnose-Signale übermitteln oder ein CAN-Timeout oder ein Verbindungsfehler vorliegt. Auch daraufhin kann die Überwachungseinrichtung bremsend eingreifen.

Bei all diesen Überprüfungen und Plausibilisierungen kann festgestellt werden, ob ein fehlerfreier Betrieb vorliegt oder der Fehlerfall eintritt. Wird der Fehlerfall festgestellt, gibt die Überwachungseinrichtung das Anhänger-Redundanz-Steuersignal an den Anhänger-Achsmodulator aus, um das Fahrzeug-Gespann in einen sicheren Zustand zu überführen. Wird hingegen ein fehlerfreier Betrieb festgestellt, wird das von der Zentral-Steuereinrichtung ausgegebene, fehlerfreie Anhänger-Steuersignal von der Überwachungseinrichtung an den Anhänger-Achsmodulator unverändert weitergeleitet. Wir festgestellt, dass beispielsweise lediglich die Zentral-Steuereinrichtung defekt ist aber die Assistenz-Steuereinrichtung funktioniert, kann auch vorgesehen sein, das Anhänger-Redundanz-Steuersignal in Abhängigkeit eines automatisiert vorgegeben Anforderungs-Signals zu generieren. Die Überwachungseinrichtung übernimmt somit vorteilhafterweise die Bremsung und sorgt dafür, das über den Anhänger die automatisierte Bremsanforderung dennoch umgesetzt werden kann. Zumindest bis zum nächsten sicheren Haltepunkt oder bis zur anstehenden Reparatur.

Da in eine bestehende Bremsanlage lediglich die Überwachungseinrichtung nachzurüsten ist, kann der Montage- und Nachrüstaufwand minimiert werden, da lediglich die elektrische Verkabelung anzupassen ist und sonst keine Veränderungen durchzuführen sind. Vorzugsweise weist die Überwachungseinrichtung dazu stecker- und pinkompatible Anschlüsse auf, so dass eine einfache Nachrüstbarkeit an die bestehende Verkabelung gewährleistet werden kann oder die Variantenvielfalt bei Neufahrzeugen mit und ohne automatischen Fahrfunktionen gering bleibt.

Vorteilhafterweise wird somit im Fehlerfall lediglich das Anhänger-Bremssystem des Fahrzeug-Gespanns aktiv betätigt und eine redundante elektrische Ansteuerung des Zugfahrzeug-Bremssystems ist nicht unbedingt erforderlich. Dadurch kann die Fahrstabilität im Fehlerfall sichergestellt werden, da eine Streckbremsung bewirkt wird, die ein Einknicken des Fahrzeug-Gespanns verhindert. Dadurch kann mit einfachen Mitteln eine sichere redundante Bremsung auch dann bewirkt werden, wenn der Fahrer selbst nicht pneumatisch redundant eingreift.

Die Fahrstabilität im Fehlerfall kann zusätzlich erhöht werden, da die Überwachungseinrichtung vor den Anhänger-Achsmodulator geschaltet ist, so dass vorteilhafterweise auch im Fehlerfall eine vom Anhänger-Achsmodulator steuerbare Bremsschlupfregelung durchgeführt werden kann, wenn dieser mit dem Anhänger-Redundanz-Steuersignal angesteuert wird.

Vorteilhafterweise wird bei einer Ansteuerung des Anhänger-Bremssystems über das Anhänger-Redundanz-Steuersignal durch die Überwachungseinrichtung im Fehlerfall eine elektrische Ansteuerung des Anhänger-Bremssystems beispielsweise von der Zentral-Steuereinrichtung verhindert, so dass im Fehlerfall ein Abbremsen in den sicheren Zustand forciert wird und von extern keine weiteren Systeme elektronisch in die Bremsung eingreifen können.

Allerdings ist vorgesehen, dass die von der Überwachungseinrichtung im Fehlerfall elektrisch angeforderte redundante Bremsung vom Fahrer manuell übersteuert werden kann, indem dieser beispielsweise das Fußbremsventil betätigt. Dadurch wird die pneumatische Redundanz aktiv, in der der Fahrer bei einem elektrischen Ausfall oder Defekt selbst eingreifen kann. Dazu kann im Anhänger-Achsmodulator eine Select-High-Funktionalität ausgebildet sein, die bewirkt, dass vom Anhänger-Achsmodulator eine ausgewählte, insbesondere die höhere Anforderung durchgesetzt wird, wobei die Select-High-Funktionalität beispielsweise durch eine Software im Anhänger-Achsmodulator ausgebildet wird. D.h. es wird das Maximum aus der vom Fahrer manuell angeforderten Bremsung und der über das Anhänger-Redundanz-Steuersignal von der Überwachungseinrichtung elektrisch angeforderten Bremsung umgesetzt.

Weiterhin kann vorgesehen sein, dass über die Überwachungseinrichtung eine Ansteuerung von Bremslichtern insbesondere des Anhängers erfolgen kann. Ein von der Überwachungseinrichtung dazu angesteuertes Lichtsystem im Anhänger ist hierbei derartig ausgestaltet, dass bei einer Ansteuerung der Bremslichter auch das Anhänger-Bremssystem, insbesondere der Anhänger-Achsmodulator, mit Energie versorgt wird. Vorteilhafterweise kann dadurch eine Energieversorgung des Anhänger-Bremssystems im Fehlerfall sichergestellt werden sowie der nachfolgende Verkehr gewarnt werden. Die Sicherheit steigt.

Zum Übertragen der jeweiligen elektrischen Signale vom Zugfahrzeug auf den Anhänger ist eine Anhänger-Steckverbindung vorgesehen, über die sowohl Energie als auch Signale übertragen werden können, die ein Betreiben des Anhänger-Bremssystems ermöglichen. Die Anhänger-Steckverbindung kann dazu beispielsweise eine CAN-Schnittstelle zum Übertragen von Daten und eine Versorgungs-Schnittstelle zum Übertragen von Energie oder alternativ eine PLC-Schnittstelle (Power-Line Communication) zum kombinierten Übertragen von Daten und Energie aufweisen. Vorteilhafterweise ist eine derartige Anhänger-Steckverbindung in der Regel bereits im Nutzfahrzeug-Gespann vorhanden, so dass kein zusätzlicher Aufwand durch das Verbinden einer weiteren Steckverbindung beim An- und Abhängen des Anhängers entsteht.

Um einen sicheren elektrisch redundanten Betrieb zu ermöglichen, können die Zentral-Steuereinrichtung, die Überwachungseinrichtung und die Assistenz-Steuereinrichtung von einer ersten Energiequelle und die Überwachungseinrichtung von einer zusätzlichen zweiten Energiequelle versorgt werden, die von der ersten Energiequelle unabhängig ist. Dadurch kann auch bei einem Ausfall der ersten Energiequelle ein elektrisch redundanter Betrieb sichergestellt werden, wobei die erste und/oder die zweite Energiequelle über die Versorgungs-Schnittstelle oder die PLC-Schnittstelle oder die Bremslicht-Schnittstelle auch das Anhänger-Bremssystem mit Energie versorgen. Eine Energieversorgung im Redundanzfall kann aber statt von der zweiten Energiequelle auch durch einen Generator, beispielsweise eine Lichtmaschine, und/oder einen Kurzzeitspeicher und/oder einen Hochvoltspeicher gewährleistet werden, die jeweils unabhängig von der ersten Energiequelle funktionieren.

Gemäß einer Ausbildung kann zusätzlich vorgesehen sein, dass nicht nur die Bremsanforderungen sondern auch über das Anforderungs-Signal übertragene Anforderungen zum Steuern eines Motors oder eines automatischen Getriebes des Fahrzeug-Gespanns überwacht und plausibilisiert werden. Somit kann auch bei einem Defekt im Antriebsstrang des Fahrzeug-Gespanns mit einer elektrisch redundanten Bremsung über den Anhänger reagiert werden, um das Fahrzeug-Gespann in einen sicheren Zustand zu überführen.

Die Erfindung wird im Folgenden anhand der beiliegenden Zeichnung erläutert. Es zeigen:
- Fig. 1a,b: erfindungsgemäße Bremsanlagen in einem Nutzfahrzeug-Gespann als schematisches Blockschaltbild;
- Fig. 1c-f: Varianten zur Energieversorgung des elektropneumatisch gesteuerten Bremssystems; und
- Fig. 2: ein Flussdiagramm zur Durchführung des erfindungsgemäßen Verfahrens.

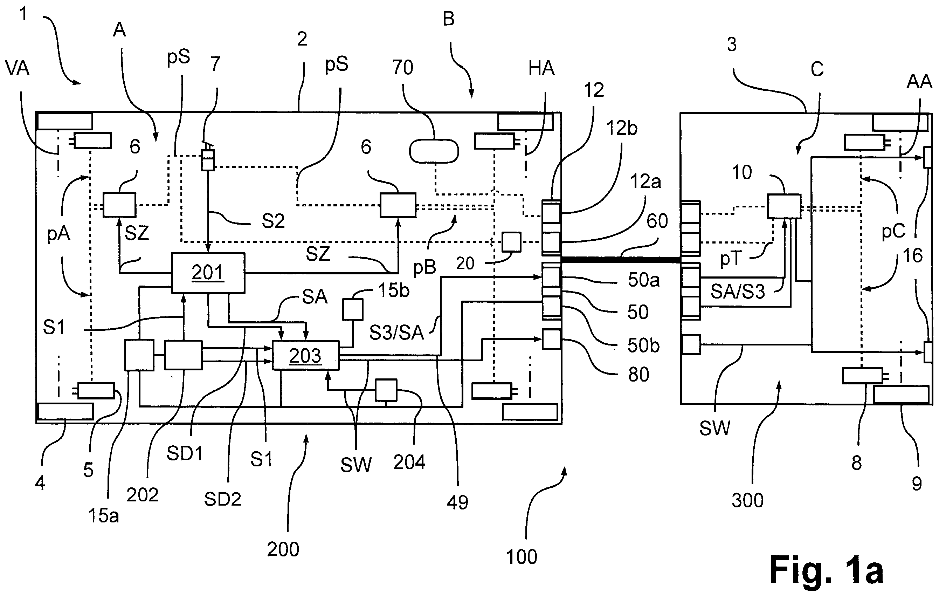

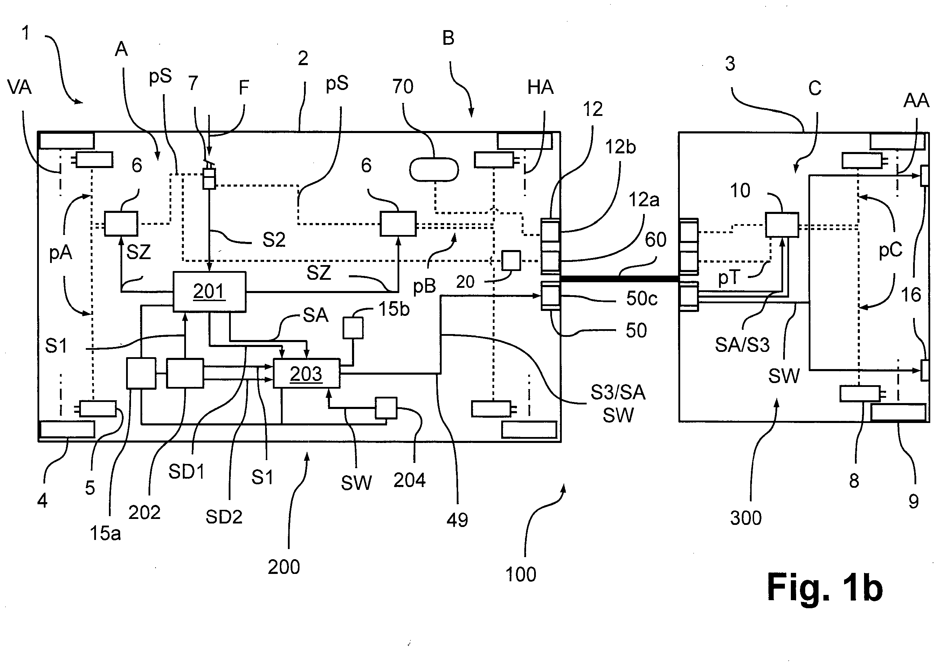

Fig. 1a und Fig. 1b zeigen schematisch ein Fahrzeug-Gespann, insbesondere Nutzfahrzeug-Gespann 1, aus einem Zugfahrzeug 2 und einem Anhänger 3 mit einer Bremsanlage 100, die zwei elektrisch steuerbare pneumatische Bremssysteme 200, 300 aufweist, wobei dem Zugfahrzeug 2 ein pneumatisches Zugfahrzeug-Bremssystem 200 und dem Anhänger 3 ein pneumatisches Anhänger-Bremssystem 300 zugeordnet ist. Der Anhänger 3 ist über eine mechanische Kopplung 60, beispielsweise über einen Königszapfen, mit dem Zugfahrzeug 2 verbunden.

Das Zugfahrzeug-Bremssystem 200 weist zwei Zugfahrzeug-Bremskreise A, B auf, die jeweils einer Zugfahrzeugachse VA, HA zugeordnet sind und in denen Räder 4 des Zugfahrzeuges 2 über Zugfahrzeug-Betriebsbremsen 5 abgebremst werden können. Im Zugfahrzeug 2 ist dazu eine Zentral-Steuereinrichtung 201 vorgesehen, die das Zugfahrzeug-Bremssystem 200 und das Anhänger-Bremssystem 300 elektrisch ansteuert, wobei dazu auf elektronischem Wege den Zugfahrzeugachsen VA, HA zugeordnete Zugfahrzeug-Achsmodulatoren 6 angesteuert werden, die einen einer elektronischen Anforderung entsprechenden Zugfahrzeug-Bremsdruck pA, pB an die Zugfahrzeug-Betriebsbremsen 5 des jeweiligen Zugfahrzeug-Bremskreises A, B aussteuern. Durch eine entsprechende elektronische Steuerung kann mit den Zugfahrzeug-Achsmodulatoren 6 auch auf einen Bremsschlupffall reagiert werden.

Die elektronische Anforderung kann entweder von einem Fußbremsventil 7 durch manuelle Betätigung F durch einen Fahrer oder aber von einer Assistenz-Steuereinrichtung 202, die dazu ausgebildet ist, das Fahrzeug-Gespann 1 automatisiert zu steuern, insbesondere abzubremsen, vorgegeben werden. Die Assistenz-Steuereinrichtung 202 gibt dazu ein Anforderungs-Signal S1 an die Zentral-Steuereinrichtung 201 mit einer Fahrzeug-Soll-Beschleunigung aSoll und/oder einer Fahrzeug-Soll-Geschwindigkeit vSoll aus. Die Zentral-Steuereinrichtung 201 gibt in Abhängigkeit des Anforderungs-Signals S1 ein entsprechendes Zugfahrzeug-Steuersignal SZ an die Zugfahrzeug-Achsmodulatoren 6 des Zugfahrzeug-Bremssystems 200 aus, um die Fahrzeug-Soll-Beschleunigung aSoll bzw. die Fahrzeug-Soll-Geschwindigkeit vSoll für das Fahrzeug-Gespann 1 einzustellen oder einzuregeln. Entsprechend kann auch vom Fußbremsventil 7 ein Betätigungs-Signal S2 elektronisch an die Zentral-Steuereinrichtung 201 übermittelt werden, die aufgrund dessen das Zugfahrzeug-Steuersignal SZ ausgibt.

Um auch den Anhänger 3 elektronisch gesteuert abzubremsen, wird von der Zentral-Steuereinrichtung 201 in Abhängigkeit der elektronischen Anforderung, d.h. dem Anforderungs-Signal S1 oder dem Betätigungs-Signal S2, weiterhin ein Anhänger-Steuersignal SA ausgegeben und im Normalbetrieb über eine Überwachungseinrichtung 203 und eine Datenleitung 49 an eine Anhänger-Steckverbindung 50 übertragen, wobei die Anhänger-Steckverbindung 50 beispielsweise als eine ISO-7638 Steckverbindung ausgeführt ist, die gemäß Fig. 1a eine CAN-Schnittstelle 50a zur Datenübertragung und eine Versorgungs-Schnittstelle 50b zur Energieübertragung und gemäß Fig. 1b eine PLC-Schnittstelle 50c (Power-Line Communication) zum gleichzeitigen Übertragen von Daten und Energie aufweist. Mit dem Anhänger-Steuersignal SA wird das Anhänger-Bremssystem 300 elektrisch angesteuert.

Im Falle einer PLC-Schnittstelle 50c (Fig. 1b) wird das Anhänger-Steuersignal SA entsprechend moduliert auf derselben Datenleitung 49 übertragen wie die Energieversorgung. Die Versorgung des Anhänger-Bremssystems 300 mit Energie erfolgt in diesem Fall über die Überwachungseinrichtung 203. In Fig. 1a hingegen wird das Anhänger-Bremssystem 300 über die Versorgungs-Schnittstelle 50b mit Energie versorgt.

Das Anhänger-Bremssystem 300 weist gemäß diesem Ausführungsbeispiel einen Anhänger-Bremskreis C auf, in dem Anhänger-Betriebsbremsen 8 an Rädern 9 der Anhängerachse AA mit einem Anhänger-Bremsdruck pC versorgt werden. Der Anhänger-Bremsdruck pC wird hierbei von einem Anhänger-Achsmodulator 10 in Abhängigkeit des Anhänger-Steuersignals SA oder eines Anhänger-Redundanz-Steuersignals S3 erzeugt, das dem Anhänger-Achsmodulator 10 über die CAN-Schnittstelle 50a bzw. die PLC-Schnittstelle 50c von der Zentral-Steuereinrichtung 201 über die Überwachungseinrichtung 203 im Zugfahrzeug 2 übermittelt wird. Durch eine entsprechende Steuerung kann mit dem Anhänger-Achsmodulator 10 auch auf einen Bremsschlupffall reagiert oder andere Komfortfunktionen ausgebildet werden.

In einem Fehlerfall, d.h. bei einem Ausfall der elektronischen Ansteuerung des Zugfahrzeug-Bremssystems 200 und/oder des Anhänger-Bremssystems 300 über die Zugfahrzeug-Achsmodulatoren 6 bzw. den Anhänger-Achsmodulator 10 durch die Zentral-Steuereinrichtung 201 kann insbesondere auf eine redundante pneumatische Ansteuerung zurückgegriffen werden, indem beispielsweise vom Fußbremsventil 7 über eine pneumatische Leitung ein der Betätigung F des Fußbremsventils 7 entsprechender Fußbremsventil-Steuerdruck pS an die Zugfahrzeug-Achsmodulatoren 6 ausgegeben wird, wobei der Fußbremsventil-Steuerdruck pS in den beiden Zugfahrzeug-Bremskreisen A, B auch unterschiedlich sein kann.

Der Fußbremsventil-Steuerdruck pS wird bei einer pneumatisch redundanten Ansteuerung von den Zugfahrzeug-Achsmodulatoren 6 entsprechend luftmengenverstärkt und als Zugfahrzeug-Bremsdruck pA, pB an die Zugfahrzeug-Betriebsbremsen 5 ausgegeben. Gleichzeitig wird der Fußbremsventil-Steuerdruck pS auch über ein Anhängerkontrollventil 20 an ein Anhänger-Steuerventil 12 übertragen und über einen pneumatischen Anhänger-Steueranschluss 12a des Anhänger-Steuerventils 12 als Anhänger-Steuerdruck pT an den Anhänger-Achsmodulator 10 ausgegeben, der diesen Anhänger-Steuerdruck pT im Fehlerfall ebenfalls luftmengenverstärkt und als Anhänger-Bremsdruck pC an die Anhänger-Betriebsbremsen 8 ausgibt, um bei der pneumatisch redundanten Ansteuerung auch den Anhänger 3 abbremsen zu können. Die pneumatische Versorgung des Anhänger-Bremskreises C wird über einen Druckmittelvorrat 70 im Zugfahrzeug 2 gewährleistet, aus dem Druckmittel über einen pneumatischen Anhänger-Versorgungsanschluss 12b des Anhänger-Steuerventils 12 an den Anhänger-Achsmodulator 10 ausgegeben wird.

Eine pneumatische Ansteuerung in der pneumatischen Redundanz erfolgt durch eine rein manuelle Betätigung F des Fußbremsventils 7, sobald der Fahrer einen Ausfall in der elektrischen Ansteuerung erkannt hat.

Um bei einem Ausfall der elektronischen Ansteuerung des Zugfahrzeug-Bremssystems 200 und/oder des Anhänger-Bremssystems 300 auch eine elektrisch gesteuerte Redundanz und somit auch dann eine elektrisch redundante Abbremsung des Fahrzeug-Gespanns 1 zu ermöglichen, wenn der Fahrer das Fußbremsventil 7 nicht betätigt, unaufmerksam ist oder nicht am Platz ist, ist in der Datenleitung 49 vor der Anhänger-Steckverbindung 50 zusätzlich die Überwachungseinrichtung 203 angeordnet. Die Überwachungseinrichtung 203 dient zur Überprüfung bzw. Plausibilisierung, ob das von der Assistenz-Steuereinrichtung 202 ausgegebene Anforderungs-Signal S1 zum automatisierten Abbremsen des Fahrzeug-Gespanns 1 vollständig und fehlerfrei umgesetzt wird oder werden kann, d.h. die Fahrzeug-Soll-Beschleunigung aSoll bzw. die Fahrzeug-Soll-Geschwindigkeit vSoll erreicht werden oder werden können. Dabei wird sowohl die Funktionsfähigkeit der Assistenz-Steuereinrichtung 202 bzw. die Fehlerhaftigkeit des Anforderungs-Signals S1 als auch die Funktionsfähigkeit der Zentral-Steuereinrichtung 201 bzw. die Fehlerhaftigkeit der Steuersignale SA, SZ überprüft bzw. plausibilisiert.

Einen Ausfall in der Zentral-Steuereinrichtung 201 und/oder der Assistenz-Steuereinrichtung 202, der dazu führt, dass die Steuersignale SA, SZ bzw. das Anforderungs-Signal S1 nicht fehlerfrei ausgegeben werden können und dadurch bereits eine fehlerfreie Umsetzung der Bremsung nicht möglich ist oder ein Fehler in einer anderen Komponente der Bremsanlage 100 erkannt wurde, beispielsweise ein Fehler in einem der Achsmodulatoren 6 oder der Druckluftversorgung, wird über ein Diagnose-Signal SD1, SD2 von der entsprechenden Steuereinrichtung 201, 202 an die Überwachungseinrichtung 203 gemeldet, so dass diese entsprechend in die Bremsung eingreifen kann. Das Diagnose-Signal SD1, SD2 wird hierbei in einer Eigendiagnose E von der entsprechenden Steuereinrichtung 201, 202 selbst erstellt, wobei das Diagnose-Signal SD1, SD2 die Information überträgt, ob die jeweilige Steuereinrichtung 201, 202 einen Defekt D aufweist. Dabei kann die Überwachungseinrichtung 203 auch feststellen, ob die Zentral-Steuereinrichtung 201 und/oder die Assistenz-Steuereinrichtung 202 überhaupt Diagnose-Signale SD1, SD2 übermitteln oder ein CAN-Timeout V1 oder ein Verbindungsfehler V2 vorliegt. Auch daraufhin kann die Überwachungseinrichtung 203 bremsend eingreifen.

Eine unvollständige Umsetzung bzw. eine Fehlerhaftigkeit des Anforderungs-Signals S1 kann beispielsweise durch Sensoren am Fahrzeug-Gespann 1 detektiert werden, die die Fahrzeug-Ist-Geschwindigkeit vlst und/oder die Fahrzeug-Ist-Beschleunigung aSoll messen. Stimmen diese nach einer vorgegebenen Zeitdauer dt nicht mit der vorgegebenen Fahrzeug-Soll-Beschleunigung aSoll oder der Fahrzeug-Soll-Geschwindigkeit vSoll innerhalb der Toleranz T überein, kann auf eine unvollständige Umsetzung der elektronischen Anforderung geschlossen werden, aufgrund dessen das Fahrzeug-Gespann 1 durch Abbremsen des Anhängers 3 gesteuert von der Überwachungseinrichtung 203 in einen sicheren Zustand überführt wird.

Falls weiterhin Unterbrechungen bzw. Sprünge in den Signalverläufen der Signale S1, SZ, SA erkannt werden, d.h. der Signalverlauf nicht monoton ist oder der Signalverlauf unter Berücksichtigung des physikalischen Fahrzeugmodells nicht plausibel ist, d.h. außerhalb der physikalisch sinnvollen Grenzen liegt, kann die Überwachungseinrichtung 203 auf einen Defekt der jeweiligen Steuereinrichtung 201, 202 schließen und ein fehlerhaftes bzw. unvollständiges Umsetzen der elektrischen Anforderung verhindern, indem sie selbst für eine redundante Bremsung in einen sicheren Zustand sorgt.

Liegen keine Ausfälle und Fehler bei der Umsetzung vor, leitet die Überwachungseinrichtung 203 das von der Zentral-Steuereinrichtung 201 ausgegebene Anhänger-Steuersignal SA unverändert an die Anhänger-Steckverbindung 50 weiter und gibt keine weiteren Signale an den Anhänger 3 aus. Ist dies jedoch nicht der Fall, d.h. kann eine vollständige und fehlerfreie elektrisch gesteuerte Abbremsung über das Zugfahrzeug 200 und/oder den Anhänger 300 nicht sichergestellt werden, wird von der Überwachungseinrichtung 203 statt dem Anhänger-Steuersignal SA ein Anhänger-Redundanz-Steuersignal S3 an die Anhänger-Steckverbindung 50 derartig ausgegeben, dass elektrisch gesteuert über den Anhänger-Achsmodulator 10 ein Anhänger-Bremsdruck pC bereitgestellt wird, der das Fahrzeug-Gespann 1 in einen sicheren Zustand abbremst.

Der sichere Zustand kann hierbei je nach Fehler und Anwendung eine unmittelbare Abbremsung bis in Stillstand SS, eine Abstellen auf dem Seitenstreifen oder in einer Nothaltebucht oder eine Übernahme der Bremsfunktion bis zur Reparatur bedeuten. Bei einer redundanten Übernahme und für den Fall, dass lediglich die Zentral-Steuereinrichtung 201 einen Defekt aufweist, steuert die Überwachungseinrichtung 203 beispielsweise ein Anhänger-Redundanz-Steuersignal S3 aus, das in Abhängigkeit des von der Assistenz-Steuereinrichtung 202 automatisiert angeforderten Anforderung-Signals S1 erzeugt wird. Somit wird die automatisierte Anforderung der Assistenz-Steuereinrichtung 202 nicht wie im Normalbetrieb über die Zentral-Steuereinrichtung 201 und das Anhänger-Steuersignal SA auf die Überwachungseinrichtung 203 und das Anhänger-Bremssystem 300 übertragen sondern direkt dazu verwendet, das Anhänger-Redundanz-Steuersignal S3 zu generieren. Somit kann die Überwachungseinrichtung 203 die Bremsung auch elektrisch redundant in Abhängigkeit der automatisierten Anforderung übernehmen und das Fahrzeug-Gespann 1 bis zur nächsten Reparatur bremsend übernehmen.

Dadurch kann das Fahrzeug-Gespann 1 auch ohne ein manuelles Eingreifen des Fahrers durch eine redundante elektronische Ansteuerung des Anhänger-Bremssystems 300 abgebremst werden, wobei dadurch je nach Beladung und Umgebungsbedingungen Fahrzeug-Soll-Beschleunigungen aSoll von bis zu -2,5m/s² ermöglicht werden.

Durch das elektrisch redundante Abbremsen lediglich des Anhängers 3 kann im Fehlerfall die Fahrstabilität des Fahrzeug-Gespanns 1 erhalten werden, da eine Streckbremsung bewirkt wird, die ein Einknicken des Fahrzeug-Gespanns 1 verhindert. Da zudem die redundante elektronische Abbremsung über den Anhänger-Achsmodulator 10 bewirkt wird, kann auch im Fehlerfall auf einen unzulässigen Bremsschlupf BS an den Rädern 9 der Anhängerachse AA reagiert werden, indem die im Normalbetrieb aktive Bremsschlupfregelung BSR auch im Fehlerfall über die Überwachungseinrichtung 203 an den Anhänger-Achsmodulator 10 übertragen wird.

Um bei einer redundanten elektronischen Ansteuerung über die Überwachungseinrichtung 203 auch eine redundante pneumatische Bremsung durch den Fahrer zu ermöglichen, ist beispielsweise im Anhänger-Achsmodulator 10 eine Select-High-Funktionalität vorgesehen, die bewirkt, dass entweder die redundante elektronische Ansteuerung über das Anhänger-Redundanz-Steuersignal S3 oder die redundante pneumatische Ansteuerung über den vom Fußbremsventil 7 vorgegebenen Zugfahrzeug-Steuerdruck pS bzw. Anhänger-Steuerdruck pT umgesetzt wird, je nachdem, welche der beiden redundanten Ansteuerung die stärkere Bremsung bzw. die geringere Fahrzeug-Soll-Beschleunigung aSoll anfordert. Dazu ist im Anhänger-Achsmodulator 10 eine Software-Logik implementiert, die den der elektronischen Anforderung des Anhänger-Redundanz-Steuersignal S3 entsprechenden Druck mit dem Zugfahrzeug-Steuerdruck pS bzw. Anhänger-Steuerdruck pT vergleicht. Der Fahrer kann somit die elektrische Ansteuerung auch übersteuern und umgedreht.

Weiterhin ist vorgesehen, dass sobald eine redundante elektronische Ansteuerung durch Vorgabe eines entsprechenden Anhänger-Redundanz-Steuersignals S3 durch die Überwachungseinrichtung 203 erfolgt, ein Weiterleiten eines von der Zentral-Steuereinrichtung 201 vorgegebenen Anhänger-Steuersignals SA verhindert wird. D.h. die redundante elektrische Vorgabe durch die Überwachungseinrichtung 203 ist vorrangig, so dass im Fehlerfall eine zuverlässige Überführung in einen sicheren Zustand ermöglicht wird, die durch ein Eingreifen der Zentral-Steuereinrichtung 201 nicht gestört wird.

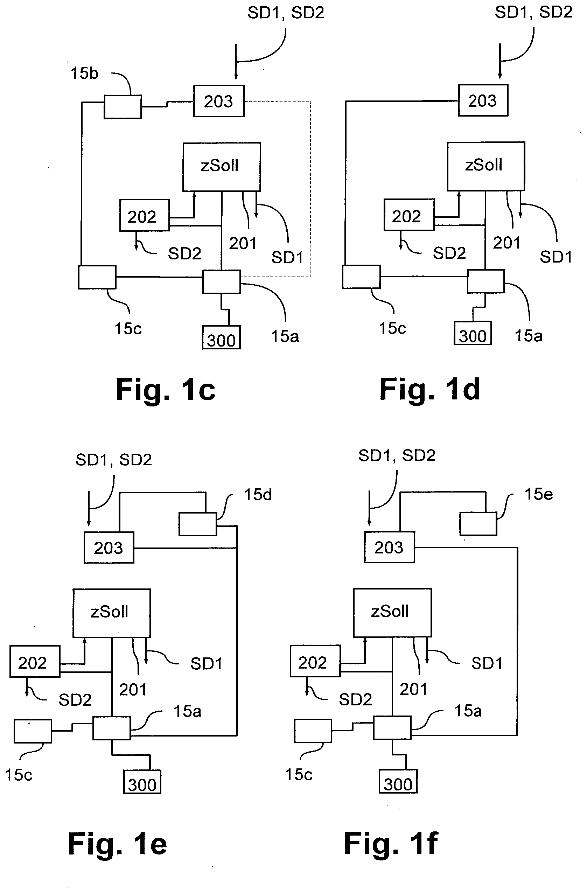

Um auch einen sicheren redundanten Betrieb bei einem Ausfall der Energieversorgung sicherzustellen, werden die Zentral-Steuereinrichtung 201, die Assistenz-Steuereinrichtung 202, die Überwachungseinrichtung 203 sowie das Anhänger-Bremssystem 300 über die Anhänger-Steckverbindung 50 - d.h. die Versorgungs-Schnittstelle 50b oder die PLC-Schnittstelle 50c - von einer ersten Energiequelle 15a und die Überwachungseinrichtung 203 zusätzlich oder ausschließlich über eine von der ersten Energiequelle 15a unabhängigen zweiten Energiequelle 15b mit Energie versorgt. Die erste Energiequelle 15a und die zweite Energiequelle 15b sind beide an einen Generator 15c, beispielsweise eine Lichtmaschine des Nutzfahrzeugs 200, angeschlossen (s. Fig. 1c). Bei einem Ausfall der ersten Energiequelle 15a kann die zweite Energiequelle 15b zumindest einen redundanten elektrischen Betrieb der Überwachungseinrichtung 203 sicherstellen.

Alternativ kann auch lediglich die erste an den Generator 15c angeschlossene Energiequelle 15a verwendet werden, die über eine Sicherung mit der Zentral-Steuereinrichtung 201, der Assistenz-Steuereinrichtung 202 sowie dem Anhänger-Bremssystem 300 und über eine weitere Sicherung mit der Überwachungseinrichtung 203 verbunden ist.

Gemäß Fig. 1d, e, f sind alternative Konzepte für eine redundante Energieversorgung gezeigt. Gemäß einer in Fig. 1d dargestellten alternativen Ausführungsform ist vorgesehen, die Überwachungseinrichtung 203 in entsprechender Weise direkt an den Generator 15c anzuschließen und darüber eine Energieversorgung sicherzustellen und die Zentral-Steuereinrichtung 201, die Assistenz-Steuereinrichtung 202 sowie das Anhänger-Bremssystem 300 an die erste Energiequelle 15a. Der Generator 15c und die erste Energiequelle 15a sind dabei derartig voneinander getrennt, dass ein Kurzschluss im Generator 15c nicht zwangsläufig für einen Kurzschluss in der ersten Energiequelle 15a und umgedreht sorgt, so dass beide im Redundanzfall unabhängig voneinander Energie liefern können.

Gemäß einer in Fig. 1e dargestellten Ausführungsform ist vorgesehen, einen Kurzzeitspeicher 15d, beispielsweise einen Kondensator, insbesondere ein Power-Cap, als Energiequelle zu verwenden, der von der ersten Energiequelle 15a im Normalbetrieb aufgeladen wird. Fällt die erste Energiequelle 15a aus, wird der aufgeladene Kurzzeitspeicher 15d als Energiequelle für die Überwachungseinrichtung 203 verwendet.

Gemäß einer weiteren Ausführungsform ist gemäß Fig. 1f vorgesehen, einen Hochvoltspeicher 15e als redundante Energieversorgung zu verwenden, der in Hybridfahrzeugen als Energiequelle für einen Antrieb verwendet wird. Dieser ist ebenfalls unabhängig von der ersten Energiequelle 15a und kann somit als redundante Energiequelle für die Überwachungseinrichtung 203 verwendet werden.

Alternativ kann auch ein zusätzliches redundantes Bordnetz aufgebaut werden.

Im Falle einer PLC-Schnittstelle 50c in Fig. 1b kann im Fehlerfall über die Überwachungseinrichtung 203 sowie die Datenleitung 49, die sowohl das Anhänger-Redundanz-Signal S3 als auch die Energie überträgt, auch das Anhänger-Bremssystem 300 mit Energie versorgt werden. Um auch das Anhänger-Bremssystem 300 gemäß Fig. 1a bei einem Ausfall der ersten Energiequelle 15a mit Energie zu versorgen, kann ergänzend ein entsprechendes elektronisches Bauteil vorgesehen sein, das bei einem Ausfall der ersten Energiequelle 15a die zweite Energiequelle 15b mit der Versorgungs-Schnittstelle 50b verbindet.

Gemäß einer alternativen Ausführung steht die Überwachungseinrichtung 203 zusätzlich mit einer Bremslichtsteuerung 204 in elektrischer Wirkverbindung. Die Bremslichtsteuerung 204 gibt im Normalbetrieb bei einer automatisiert angeforderten Bremsung ein Bremslichtsignal SW aus, das über die Überwachungseinrichtung 203 sowie über eine Bremslicht-Schnittstelle 80 auch auf den Anhänger 3 übertragen wird. Im Anhänger 3 werden bei vorliegendem Bremslichtsignal SW Bremslichter 16 des Anhängers 3 aktiviert, wobei durch das vorliegende Bremslicht-Signal SW von der Überwachungseinrichtung 203 eine Spannung übertragen wird, die gleichzeitig für eine Energieversorgung der Bremslichter 16 sorgt. Gleichzeitig wird diese Spannung auch auf den Anhänger-Achsmodulator 10 übertragen, so dass dieser immer dann redundant mit Energie versorgt wird, sobald die Bremslichter 16 aktiviert werden.

Wird also der Fehlerfall von der Überwachungseinrichtung 203 erkannt und wird aufgrund eines Ausfalls der ersten Energiequelle 15a auch die Bremslichtsteuerung 204 nicht mehr mit Energie versorgt, steuert stattdessen die Überwachungseinrichtung 203, die dann über die zweite Energiequelle 15b versorgt wird, das Bremslichtsignal SW über die Bremslicht-Schnittstelle 80 an den Anhänger 3 aus, woraufhin das Anhänger-Bremssystem 300 bzw. der Anhänger-Achsmodulator 10 wieder mit Energie versorgt wird.

Dadurch kann im Fehlerfall also auch durch die Überwachungseinrichtung 203 sowohl über die PLC-Schnittstelle 50c als auch über die Bremslicht-Schnittstelle 80 eine redundante Energieversorgung des Anhänger-Bremssystems 300 sichergestellt werden sowie eine Aktivierung der Bremslichter 16 erfolgen.

Im Falle einer PLC-Schnittstelle 50c gemäß Fig. 1b wird auch das Bremslichtsignal SW über diese übertragen und dadurch eine Versorgung der Bremslichter 16 erreicht. Eine weitere redundante Energieversorgung des Anhänger-Bremssystems 300 ist in diesem Fall nicht nötig, da diese Redundanz bereits über die PLC-Schnittstelle 50c selbst gewährleistet wird.

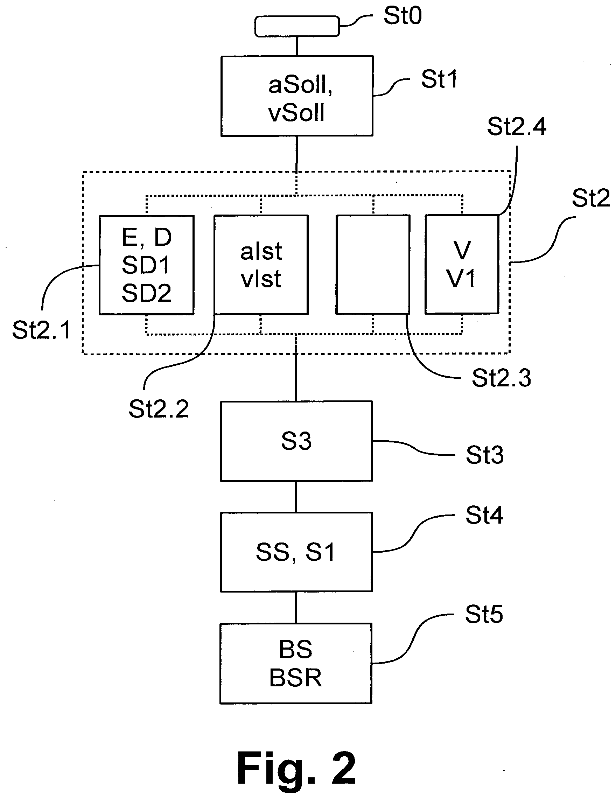

Gemäß Fig. 2 kann das erfindungsgemäße Verfahren wie folgt durchgeführt werden:
In einem anfänglichen Schritt St0 wird die Bremsanlage 100 initialisiert, beispielsweise mit dem Starten des Fahrzeug-Gespanns 1.

In einem ersten Schritt St1 wird das Anforderungs-Signal S1 eingelesen, das eine Fahrzeug-Soll-Beschleunigung aSoll und/oder eine Fahrzeug-Soll-Geschwindigkeit vSoll überträgt und dazu dient, das Fahrzeug-Gespann 1 automatisiert gesteuert abzubremsen. Aufgrund des Anforderungs-Signals S1 wird im Normalbetrieb das Zugfahrzeug-Bremssystem 200 und das Anhänger-Bremssystem 300 über die entsprechenden Steuersignale SA, SZ angesteuert und über die jeweiligen Achsmodulatoren 6, 10 eine Bremsung bewirkt.

In einem zweiten Schritt St2 wird das Anforderungs-Signal S1 von der Überwachungseinrichtung 203 überwacht und plausibilisiert, um festzustellen, ob die automatisiert angeforderte Fahrzeug-Soll-Beschleunigung aSoll und/oder die automatisiert angeforderte Fahrzeug-Soll-Geschwindigkeit vSoll von den jeweiligen Betriebsbremsen 5, 8 vollständig oder fehlerfrei umgesetzt werden oder werden können.

Dazu wird in einem Teilschritt St2.1 beispielsweise überprüft, ob von der Zentral-Steuereinrichtung 201 und/oder der Assistenz-Steuereinrichtung 202 ein Diagnose-Signal SD1, SD2 ausgegeben wird, die angeben, ob eine Funktionsstörung oder ein Ausfall der entsprechenden Steuereinrichtung 201, 202 oder der angeschlossenen Sensoren oder Komponenten aufgrund eines Defekts D vorliegt.

In einem weiteren Teilschritt St2.2 kann auch überprüft werden, ob die automatisiert angeforderte Fahrzeug-Soll-Beschleunigung aSoll und/oder die Fahrzeug-Soil-Geschwindigkeit vSoll unter Berücksichtigung einer Toleranz T der aktuell vorliegenden Fahrzeug-Ist-Beschleunigung alst bzw. der Fahrzeug-Ist-Geschwindigkeit vSoll entsprechen.

In einem Teilschritt St2.3 kann von der Überwachungseinrichtung 203 auch ermittelt werden, ob es Unterbrechungen bei der Signalübertragung gibt und das Anforderungs-Signals S1 oder die Steuersignale SZ, SA Sprünge aufweisen, die auf einen Defekt in der jeweiligen Steuereinrichtung 201, 202 hinweisen.

In einem Teilschritt St2.4 kann überprüft werden ob ein Verbindungsfehler V, beispielsweise ein CAN-Timeout V1, vorliegt und deshalb keine Signale S1, SA, SZ, SD1, SD2 übermittelt werden können.

Liegt eine Störung vor, d.h. eine automatisierte Anforderung wird nicht vollständig oder fehlerfrei umgesetzt oder kann nicht vollständig oder fehlerfrei umgesetzt werden, wird in einem dritten Schritt St3 von der Überwachungseinrichtung 203 das Anhänger-Redundanz-Steuersignal S3 an die Anhänger-Steckverbindung 50 ausgegeben, um in einem vierten Schritt St4 über den Anhänger-Achsmodulator 10 eine elektrisch redundante Bremsung des Anhängers 3 anzufordern und darüber das komplette Nutzfahrzeug-Gespann 1 in einen sicheren Zustand, beispielsweise den Stillstand SS, abzubremsen. Liegt lediglich ein Ausfall in der Zentral-Steuereinrichtung 201 vor, kann das Anhänger-Redundanz-Steuersignal S3 beispielsweise in Abhängigkeit des Anforderungs-Signals S1 von der Assistenz-Steuereinrichtung 202 erzeugt werden, so dass - statt der Zentral-Steuereinrichtung 201 - durch die Überwachungseinrichtung 203 eine Übernahme der automatisierten Bremsung erfolgen kann. In einem fünften Schritt St5 kann bei Auftreten eines unzulässigen Bremsschlupfs BS am Anhänger 3 während der elektrisch redundanten Bremsung eine Bremsschlupfregelung BSR aktiviert werden, die für eine Stabilisierung des Anhängers 3 sorgt.

Liegt keine Störung vor wird von der Überwachungseinrichtung 203 das von der Zentral-Steuereinrichtung 201 ausgegebene Anhänger-Steuersignal SA unverändert an die Anhänger-Steckverbindung 50 weitergeleitet. Dabei kann auch vorgesehen sein, latente Fehler zu erkennen, indem auch ohne eine erkannte Störung das Anhänger-Bremssystem 300 von der Überwachungseinrichtung 203 ab und zu angesteuert wird. Dadurch kann vermieden werden, dass eine lediglich im Ausnahmefall auftretende elektrisch redundante Ansteuerung durch einen latenten Fehler verhindert wird.

### Bezugszeichenliste (Bestandteil der Beschreibung)

- 1: (Nutz)fahrzeug-Gespann
- 2: Zugfahrzeug
- 3: Anhänger
- 4: Räder des Zugfahrzeug
- 5: Zugfahrzeug-Betriebsbremsen
- 6: Zugfahrzeug-Achsmodulatoren
- 7: Fußbremsventil
- 8: Anhänger-Betriebsbremsen
- 9: Räder des Anhängers
- 10: Anhänger-Achsmodulator
- 12: Anhänger-Steuerventil
- 12a: pneumatischer Anhänger-Steueranschluss
- 12b: pneumatischer Anhänger-Versorgungsanschluss
- 15a: erste Energiequelle
- 15b: zweite Energiequelle
- 15c: Generator
- 15d: Kurzzeitspeicher
- 15e: Hochvoltspeicher
- 16: Bremslichter
- 20: Anhängerkontrollventil
- 49: Datenleitung
- 50: Anhänger-Steckverbindung
- 50a: CAN-Schnittstelle
- 50b: Versorgungs-Schnittstelle
- 50c: PLC-Schnittstelle
- 60: mechanische Kopplung
- 70: Druckmittelvorrat
- 80: Bremslicht-Schnittstelle
- 100: Bremsanlage
- 200: Zugfahrzeug-Bremssystem
- 201: Zentral-Steuereinrichtung (ECU)
- 202: Assistenz-Steuereinrichtung
- 203: Überwachungseinrichtung
- 204: Bremslichtsteuerung
- 300: Anhänger-Bremssystem

- A, B: Zugfahrzeug-Bremskreise
- AA: Anhängerachse
- alst: Fahrzeug-Ist-Beschleunigung
- aSoll: Fahrzeug-Soll-Beschleunigung
- BS: Bremsschlupf
- BSR: Bremsschlupfregelung
- C: Anhänger-Bremskreis
- D: Defekt
- dt: Zeitdauer
- E: Eigendiagnose
- F: Betätigung
- pA, pB: Zugfahrzeug-Bremsdruck
- pC: Anhänger-Bremsdruck
- pS: Fußbremsventil-Steuerdruck
- pT: Anhänger-Steuerdruck
- S1: Anforderungs-Signal
- S2: Betätigungs-Signal
- S3: Anhänger-Redundanz-Steuersignal
- SA: Anhänger-Steuersignal
- SD1, SD2: Diagnose-Signal
- SS: Stillstand
- SW: Bremslichtsignal
- SZ: Zugfahrzeug-Steuersignal
- T: Toleranz
- V: Verbindungsfehler
- V1: CAN-Timeout
- VA, HA: Zugfahrzeugachsen
- vlst: Fahrzeug-Ist-Geschwindigkeit
- vSoll: Fahrzeug-Soll-Geschwindigkeit

- St1, St2, St2.1, St2.2, St2.3,:
- St2.4, St3, St4, St5: Schritte des Verfahrens

## Patentansprüche

1. Verfahren zum elektronischen Steuern einer Bremsanlage (100), insbesondere pneumatische Bremsanlage, mit zwei Bremssystemen (200, 300), insbesondere pneumatische Bremssysteme, für ein automatisiert steuerbares Fahrzeug-Gespann (1), insbesondere Nutzfahrzeug-Gespann (1), mit mindestens den folgenden Schritten:
- Einlesen eines Anforderungs-Signals (S1) zum automatisierten elektronischen Ansteuern von Betriebsbremsen (5, 8) in einem Zugfahrzeug-Bremssystem (200) eines Zugfahrzeuges (2) und/oder eines Anhänger-Bremssystems (300) eines Anhängers (3) des Fahrzeug-Gespanns (1), wobei über das Anforderungs-Signal (S1) eine von den jeweiligen Betriebsbremsen (5, 8) auszusteuernde, automatisiert angeforderte Fahrzeug-Soll-Beschleunigung (aSoll) und/oder eine automatisiert angeforderte Fahrzeug-Soll-Geschwindigkeit (vSoll) übertragen werden (St1);
- Überwachen und Plausibilisieren des Anforderungs-Signals (S1) zum Feststellen, ob die automatisiert angeforderte Fahrzeug-Soll-Beschleunigung (aSoll) und/oder die automatisiert angeforderte Fahrzeug-Soll-Geschwindigkeit (vSoll) von den jeweiligen Betriebsbremsen (5, 8) vollständig oder fehlerfrei ausgesteuert werden oder werden können (St2, St2.1, St2.2, St2.3);
- Ausgeben eines Anhänger-Redundanz-Steuersignals (S3) an das Anhänger-Bremssystem (300), falls eine Aussteuerung der automatisiert angeforderten Fahrzeug-Soll-Beschleunigung (aSoll) und/oder der automatisiert angeforderten Fahrzeug-Soll-Geschwindigkeit (vSoll) nicht vollständig oder fehlerfrei erfolgt ist oder erfolgen kann (St3).

2. Verfahren nach Anspruch 1, **dadurch gekennzeichnet, dass** weiterhin ein elektrisch redundantes Ansteuern des Anhänger-Bremssystems (300) mit dem Anhänger-Redundanz-Steuersignal (S3) stattfindet (St4) zum Überführen des Fahrzeug-Gespanns (1) in einen sicheren Zustand, wobei aufgrund des Anhänger-Redundanz-Steuersignals (S3) ein Abbremsen des Fahrzeug-Gespanns (1) ausschließlich über das Anhänger-Bremssystem (300) erfolgt (St4).

3. Verfahren nach Anspruch 1 oder 2, **dadurch gekennzeichnet, dass** zum Plausibilisieren des Anforderungs-Signals (S1) geprüft wird, ob ein Defekt (D) in einer die Bremssysteme (200, 300) steuernden Zentral-Steuereinrichtung (201) und/oder einer das Anforderungs-Signal (S1) ausgebenden Assistenz-Steuereinrichtung (202) vorliegt, wobei ein Defekt (D) über eine Diagnose-Signal (SD1, SD2) gemeldet wird, wobei das Diagnose-Signal (SD1, SD2) in einer Eigendiagnose (E) in der jeweiligen Steuereinrichtung (201, 202) erstellt wird (St2.1).

4. Verfahren nach einem der vorhergehenden Ansprüche, **dadurch gekennzeichnet, dass** zum Plausibilisieren des Anforderungs-Signals (S1) geprüft wird, ob ein Verbindungsfehler (V), beispielsweise ein CAN-Timeout (V1), vorliegt (St2.4).

5. Verfahren nach einem der vorhergehenden Ansprüche, **dadurch gekennzeichnet, dass** zum Plausibilisieren des Anforderungs-Signals (S1) geprüft wird, ob eine tatsächlich vorliegende Fahrzeug-Ist-Beschleunigung (alst) und/oder eine Fahrzeug-Ist-Geschwindigkeit (vlst) innerhalb eines Toleranzbereiches (T) um die Fahrzeug-Soll-Beschleunigung (aSoll) bzw. die Fahrzeug-Soll-Geschwindigkeit (vSoll) liegen (St2.2).

6. Verfahren nach einem der vorhergehenden Ansprüche, **dadurch gekennzeichnet, dass** zum Plausibilisieren des Anforderungs-Signals (S1) geprüft wird, ob das Anforderungs-Signal (S1) und/oder von einer Zentral-Steuereinrichtung (201) ausgegebene Steuersignale (SZ, SA) zum elektrischen Steuern von Achsmodulatoren (6, 10) des jeweiligen Bremssystems (200, 300) monoton sind (St2.3).

7. Verfahren nach einem der vorhergehenden Ansprüche, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) das Zugfahrzeug-Bremssystem (200) nicht angesteuert wird.

8. Verfahren nach einem der vorhergehenden Ansprüche, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) und für den Fall, dass eine das Fahrzeug-Gespann (1) über ein Anforderungs-Signal (S1) automatisiert steuernde Assistenz-Steuereinrichtung (202) keinen Defekt (D) aufweist, das Anhänger-Redundanz-Steuersignal (S3) in Abhängigkeit des Anforderungs-Signals (S1) erzeugt wird.

9. Verfahren nach einem der Ansprüche 1 bis 7, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) das Anhänger-Redundanz-Steuersignal (S3) derartig generiert wird, dass das Fahrzeug-Gespann (1) in den Stillstand (SS) überführt wird.

10. Verfahren nach einem der vorhergehenden Ansprüche, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) im Anhänger-Bremssystem (300) bei Auftreten eines Bremsschlupffalls (BS) eine Bremsschlupfregelung (BSR) durchgeführt wird (St5).

11. Verfahren nach einem der vorhergehenden Ansprüche, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) lediglich eine elektrische redundante Ansteuerung des Anhänger-Bremssystems (300) (St4) durch das Anhänger-Redundanz-Steuersignal (S3) ermöglicht wird.

12. Verfahren nach einem der vorhergehenden Ansprüche, **dadurch gekennzeichnet, dass** bei einer nicht vollständigen oder fehlerfreien Aussteuerung der automatisiert angeforderten Fahrzeug-Soll-Beschleunigung (aSoll) und/oder der automatisiert angeforderten Fahrzeug-Soll-Geschwindigkeit (vSoll) (St3) eine redundante pneumatische Ansteuerung des Anhänger-Bremssystems (300) über einen Anhänger-Steuerdruck (pT) in Abhängigkeit einer manuellen Betätigung (F) ermöglicht wird, falls die pneumatisch redundante Bremsanforderung über den Anhänger-Steuerdruck (pT) größer ist als die elektrisch redundante Bremsanforderung über das Anhänger-Redundanz-Steuersignal (S3) .

13. Verfahren nach einem der vorhergehenden Ansprüche, **dadurch gekennzeichnet, dass** bei einer nicht vollständigen oder fehlerfreien Umsetzung der automatisiert angeforderten Fahrzeug-Soll-Beschleunigung (aSoll) und/oder der automatisiert angeforderten Fahrzeug-Soll-Geschwindigkeit (vSoll) (St3) sowie bei einem Ausfall einer ersten Energiequelle (15a) eine Energieversorgung des Anhänger-Bremssystems (300) über eine zweite Energiequelle (15b) erfolgt.

14. Verfahren nach Anspruch 13, **dadurch gekennzeichnet, dass** bei einer elektrisch redundanten Ansteuerung des Anhänger-Bremssystems (300) (St4), aufgrund derer über ein Bremslichtsignal (SW) ein Aktivieren von Bremslichtern (16) im Anhänger (3) erfolgt, gleichzeitig das Anhänger-Bremssystem (300) über das Bremslichtsignal (SW) mit Energie versorgt wird.

15. Verfahren nach Anspruch 3 oder Anspruch 8, **dadurch gekennzeichnet, dass** die Assistenz-Steuereinrichtung (202) lediglich dann ein Anforderungs-Signal (S1) ausgibt, wenn ein Anhänger (3) mit einem Anhänger-Bremssystem (300) erkannt wurde.

16. Elektrisch steuerbare Bremsanlage (100) für ein automatisiert steuerbares Fahrzeug-Gespann (1) aus zumindest einem Zugfahrzeug (2) und einem Anhänger (3), insbesondere geeignet zur Durchführung des Verfahrens nach einem der vorhergehenden Ansprüche, mindestens aufweisend:
ein Zugfahrzeug-Bremssystem (200) mit mindestens einem Zugfahrzeug-Bremskreis (A, B) und ein Anhänger-Bremssystem (300) mit mindestens einem Anhänger-Bremskreis (C) zum Abbremsen des Fahrzeug-Gespanns (1) über Zugfahrzeug-Betriebsbremsen (5) und Anhänger-Betriebsbremsen (8),
ein Fußbremsventil (7) zum manuellen Vorgeben eines elektrischen Betätigungs-Signals (S2) in Abhängigkeit einer manuellen Betätigung (F),
eine Assistenz-Steuereinrichtung (202) zum automatisierten Vorgeben eines Anforderung-Signals (S1),
eine Zentral-Steuereinrichtung (201) zum Ausgeben von elektrischen Steuersignalen (SZ, SA) an mindestens einen Zugfahrzeug-Achsmodulator (6) in dem Zugfahrzeug-Bremssystem (200) und mindestens einen Anhänger-Achsmodulator (10) in dem Anhänger-Bremssystem (300) in Abhängigkeit des Anforderungs-Signals (S1) oder des Betätigungs-Signals (S2),
eine Anhänger-Steckverbindung (50) zum Übertragen von Signalen (SA, S3, SW) vom Zugfahrzeug (2) auf den Anhänger (3),
**dadurch gekennzeichnet, dass**
weiterhin eine Überwachungseinrichtung (203) vorgesehen ist, die in einer zum Anhänger-Bremssystem (300) führenden Datenleitung (49) angeordnet ist und die ausgebildet ist, die vollständige oder fehlerfreie Aussteuerung des automatisiert angeforderten Anforderungs-Signals (S1) zu überwachen und zu plausibilisieren und ein Anhänger-Redundanz-Signal (S3) an das Anhänger-Bremssystem (300) auszugeben, wenn die Aussteuerung nicht vollständig oder fehlerfrei erfolgt ist oder erfolgen kann, um das Fahrzeug-Gespann (1) über den Anhänger (3) abzubremsen und das Fahrzeug-Gespann (1) in einen sicheren Zustand zu überführen.

17. Elektrisch steuerbare Bremsanlage (100) nach Anspruch 16, **dadurch gekennzeichnet, dass** die Überwachungseinrichtung (203) in einer Datenleitung (49) zwischen der Zentral-Steuereinrichtung (201) und einem dem Anhänger-Bremssystem (300) zugeordneten Anhänger-Achsmodulator (10) angeordnet ist.

18. Elektrisch steuerbare Bremsanlage (100) nach Anspruch 17, **dadurch gekennzeichnet, dass** die Überwachungseinrichtung (203) im Zugfahrzeug (1) angeordnet ist und das Anhänger-Redundanz-Steuersignal (S3) über die Anhänger-Steckverbindung (50) auf das Anhänger-Bremssystem (300) übertragbar ist.

19. Elektrisch steuerbare Bremsanlage (100) nach einem der Ansprüche 16 bis 18, **dadurch gekennzeichnet, dass** die Anhänger-Steckverbindung (50) eine CAN-Schnittstelle (50a) und eine Versorgungs-Schnittstelle (50b) oder eine PLC-Schnittstelle (50c) aufweist.

20. Elektrisch steuerbare Bremsanlage (100) nach Anspruch 19, **dadurch gekennzeichnet, dass** die Zentral-Steuereinrichtung (201), die Assistenz-Steuereinrichtung (202) und die Überwachungseinrichtung (203) mit einer ersten Energiequelle (15a) verbunden sind und die Überwachungseinrichtung (203) zusätzlich oder ausschließlich mit einer von der ersten Energiequelle (15a) unabhängigen zweiten Energiequelle (15b),
wobei das Anhänger-Bremssystem (300) über die Anhänger-Steckverbindung (50) von der ersten oder der zweiten Energiequelle (15a, 15b) mit Energie versorgt werden kann, wobei dazu die erste Energiequelle (15a) und/oder die zweite Energiequelle (15b) mit der Versorgungs-Schnittstelle (50b) oder der PLC-Schnittstelle (50c) verbindbar sind.

21. Elektrisch steuerbare Bremsanlage (100) nach einem der Ansprüche 16 bis 20, **dadurch gekennzeichnet, dass** die Bremsanlage eine pneumatische Bremsanlage (100) ist.

22. Fahrzeug-Gespann (1), insbesondere Nutzfahrzeug-Gespann (1), mit einer elektronisch steuerbaren pneumatischen Bremsanlage (100) nach einem der Ansprüche 16 bis 21, insbesondere geeignet zur Durchführung eines Verfahrens nach einem der Ansprüche 1 bis 15.

## Claims

1. A method for electronically controlling a brake unit (100), in particular a pneumatic brake unit, having two brake systems (200, 300), in particular pneumatic brake systems, for an automated controllable vehicle combination (1), in particular a commercial vehicle combination (1), having at least the following steps:
- reading a request signal (S1) for automated electronic controlling service brakes (5, 8) in a towing vehicle brake system (200) of a towing vehicle (2) and/or of a trailer brake system (300) of a trailer (3) of the vehicle combination (1), wherein via the request signal (S1) an automated requested vehicle target acceleration (aSoll) to be controlled by the respective service brakes (5, 8) and/or an automated request vehicle target speed (vSoll) are transmitted (St1);
- monitoring and verifying the plausibility of the request signal (S1) to determine whether the automated requested vehicle target acceleration (aSoll) and/or the automated request vehicle target speed (vSoll) are or can be completely or correctly controlled by the respective service brakes (5, 8) (St3, St2.1, St2.2, St2.3);
- outputting a trailer redundancy control signal (S3) to the trailer brake system (300), if the automated requested vehicle target acceleration (aSoll) and or the automated requested vehicle target speed (vSoll) has not been or cannot be controlled completely or correctly (St3).

2. The method according to claim 1, **characterized in that** furthermore an electrically redundant control of the trailer brake system (300) takes place with the trailer redundancy control signal (S3) (St4) for transferring the vehicle combination (1) to a secure state, wherein on the basis of the trailer redundancy control signal (S3) a deceleration of the vehicle combination (1) occurs exclusively via the trailer brake system (300) (St4).

3. The method according to claim 1 or 2, **characterized in that** to verify the plausibility of the request signal (S1) a check is performed as to whether a defect (D) in a central control device (201) controlling the brake systems (200, 300) and/or an assistance control device (202) outputting the request signal (S1) is present, wherein a defect (D) is reported via a diagnosis signal (SD1, SD2), wherein the diagnosis signal (SD1, SD2) is created in a self-diagnosis (E) in the respective control device (201, 202) (St2.1).

4. The method according to any of the foregoing claims, **characterized in that** to verify the plausibility of the request signal (S1) a check is performed as to whether a connection error (V), for example a CAN timeout (V1), is present (St2.4).

5. The method according to any of the foregoing claims, **characterized in that** to verify the plausibility of the request signal (S1) a check is performed as to whether an actually present vehicle actual acceleration (aIst) and/or a vehicle actual speed (vIst) lies within a tolerance range (T) about the vehicle target acceleration (aSoll) or the vehicle target speed (vSoll) (St2.2).

6. The method according to any of the foregoing claims, **characterized in that** to verify the plausibility of the request signal (S1) a check is performed as to whether the request signal (S1) and/or control signals (SZ, SA) output by a central control device (201) for electronically controlling axle modulators (6, 10) of the respective brake system (200, 300) are monotone (St2.3).

7. The method according to any of the foregoing claims, **characterized in that** in the event of a non-complete or correct control of the automated requested vehicle target acceleration (aSoll) and/or of the automated requested vehicle target speed (vSoll) (St3) the towing vehicle brake system (200) is not controlled.

8. The method according to any of the foregoing claims, **characterized in that** in the event of a non-complete or correct control of the automated requested vehicle target acceleration (aSoll) and/or of the automated requested vehicle target speed (vSoll) (St3) and in case an automated assistance control device (202) controlling the vehicle combination (1) via a request signal (S1) has no defect (D), the trailer redundancy control signal (S3) is generated as a function of the request signal (S1).

9. The method according to any of claims 1 to 7, **characterized in that** in the event of a non-complete or correct control of the automated requested vehicle target acceleration (aSoll) and/or of the automated requested vehicle target speed (vSoll) (St3) the trailer redundancy control signal (S3) is generated such that the vehicle combination (1) is transferred to an idle state (SS).

10. The method according to any of the foregoing claims, **characterized in that** in the event of a non-complete or correct control of the automated requested vehicle target acceleration (aSoll) and/or of the automated requested vehicle target speed (vSoll) (St3), in the event of a brake slip (BS) a brake slip regulation (BSR) is carried out in the trailer brake system (300) (St5).

11. The method according to any of the foregoing claims, **characterized in that** in the event of a non-complete or correct control of the automated requested vehicle target acceleration (aSoll) and/or of the automated requested vehicle target speed (vSoll) (St3) only an electrically redundant control of the trailer brake system (300) (St4) is facilitated by the trailer redundancy control signal (S3).

12. The method according to any of the foregoing claims, **characterized in that** in the event of a non-complete or correct control of the automated requested vehicle target acceleration (aSoll) and/or of the automated requested vehicle target speed (vSoll) (St3) a redundant pneumatic control of the trailer brake system (300) is facilitated via a trailer control pressure (pT) as a function of a manual actuation (F), in case the pneumatically redundant brake request via the trailer control pressure (pT) is greater than the electrically redundant brake request via the trailer redundancy control signal (S3).

13. The method according to any of the foregoing claims, **characterized in that** in the event of a non-complete or correct control of the automated requested vehicle target acceleration (aSoll) and/or of the automated requested vehicle target speed (vSoll) (St3) as well as in the event of a failure of a first energy source (15a) an energy supply of the trailer brake system (300) occurs via a second energy source (15b).

14. The method according to claim 13, **characterized in that** in the event of an electrically redundant control of the trailer brake system (300) (St4), on the basis of which via a brake light signal (SW) an activation of brake lights (16) in the trailer (3) occurs, simultaneously the trailer brake system (300) is supplied with energy via the brake light signal (SW).

15. The method according to claim 3 or claim 8, **characterized in that** the assistance control device (202) only outputs a request signal (S1) when a trailer (3) with a trailer brake system (300) has been detected.

16. An electrically controllable brake system (100) for an automated controllable vehicle combination (1) of at least one towing vehicle (2) and a trailer (3), in particular suitable for carrying out the method according to any of the foregoing claims, having at least:
a towing vehicle brake system (200) with at least a towing vehicle brake circuit (A, B) and a trailer brake system (300) with at least a trailer brake circuit (C) for braking the vehicle combination (1) via towing vehicle service brakes (5) and trailer service brakes (8),
a foot brake valve (7) for manually specifying an electrical actuation signal (S2) as a function of a manual actuation (F),
an assistance control device (202) for automated specifying of a request signal (S1),
a central control device (201) for outputting electrical control signals (SZ, SA) to at least one towing vehicle axle modulator (6) in the towing vehicle brake system (200) and at least one trailer axle modulator (10) in the trailer brake system (300) as a function of the request signal (S1) or of the actuation signal (S2),
a trailer plug connection (50) for transmitting signals (SA, S3, SW) from the towing vehicle (2) to the trailer (3),
**characterized in that** in addition a monitoring device (203) is provided, which is arranged in a data line (49) leading to the trailer brake system (300) and which is configured to monitor and verify the plausibility of the complete or correct control of the automated requested request signal (S1) and output a trailer redundancy signal (S3) to the trailer brake system (300) when the control has not occurred or cannot occur completely or correctly, in order to brake the vehicle combination (1) via the trailer (3) and to transfer the vehicle combination (1) to a secure state.

17. The electrically controllable brake system (100) according to claim 16, **characterized in that** the monitoring device (203) is arranged in a data line (49) between the central control device (201) and a trailer axle modulator (10) assigned to the trailer brake system (300).

18. The electrically controllable brake system (100) according to claim 17, **characterized in that** the monitoring device (203) is arranged in the towing vehicle (1) and the trailer redundancy control signal (S3) can be transmitted to the trailer brake system (300) via the trailer plug connection (50).

19. The electrically controllable brake system (100) according to any of claims 16 to 18, **characterized in that** the trailer plug connection (50) has a CAN interface (50a) and a supply interface (50b) or a PLC interface (50c).

20. The electrically controllable brake system (100) according to claim 19, **characterized in that** the central control device (201), the assistance control device (202) and the monitoring device (203) are connected to a first energy source (15a) and the monitoring device (203) is additionally or exclusively connected to a second energy source (15b) independent from the first energy source (15a), wherein the trailer brake system (300) can be supplied with energy by the first or the second energy source (15a, 15b) via the trailer plug connection (50), wherein to this end the first energy source (15a) and/or the second energy source (15b) can be connected to the supply interface (50b) or the PLC interface (50c).

21. The electrically controllable brake system (100) according to any of claims 16 to 20, **characterized in that** the brake system is a pneumatic brake system (100).

22. A vehicle combination (1), in particular a commercial vehicle combination (1), having an electronically controllable pneumatic brake system (100) according to any of claims 16 to 21, in particular suitable for carrying out a method according to any of claims 1 to 15.

## Revendications

1. Procédé pour la commande électronique d'une installation de freinage (100), en particulier installation de freinage pneumatique, avec deux systèmes de freinage (200, 300), en particulier systèmes de freinage pneumatiques, pour un attelage de véhicule (1) pouvant être commandé de manière automatisée, en particulier attelage de véhicule utilitaire (1), avec au moins les étapes suivantes :
- la lecture d'un signal de demande (S1) pour la commande électronique automatisée de freins de service (5, 8) dans un système de freinage de véhicule tracteur (200) d'un véhicule tracteur (2) et/ou d'un système de freinage de remorque (300) d'une remorque (3) de l'attelage de véhicule (1), dans lequel une accélération de consigne de véhicule (aSoll) demandée de manière automatisée, destinée à être commandée par les freins de service (5, 8) respectifs et/ou une vitesse de consigne de véhicule (vSoll) demandée de manière automatisée sont transmises par l'intermédiaire du signal de demande (S1) (St1) ;
- la surveillance et le contrôle de plausibilité du signal de demande (S1) pour déterminer si l'accélération de consigne de véhicule (aSoll) demandée de manière automatisée et/ou la vitesse de consigne de véhicule (vSoll) demandée de manière automatisée sont ou peuvent être modulées complètement ou sans erreur par les freins de service (5, 8) respectifs (St2, St2.1, St2.2, St2.3) ;
- la délivrance d'un signal de commande de redondance de remorque (S3) au système de freinage de remorque (300), au cas où une modulation de l'accélération de consigne de véhicule (aSoll) demandée de manière automatisée et/ou de la vitesse de consigne de véhicule (vSoll) demandée de manière automatisée ne s'effectuerait pas ou ne pourrait s'effectuer complètement ou sans erreur (St3).

2. Procédé selon la revendication 1, **caractérisé en ce qu'**en outre une commande redondante de manière électrique du système de freinage de remorque (300) avec le signal de commande de redondance de remorque (S3) a lieu (St4) pour amener l'attelage de véhicule (1) dans un état sûr, dans lequel sur la base du signal de commande de redondance de remorque (S3) un freinage de l'attelage de véhicule (1) a lieu exclusivement par l'intermédiaire du système de freinage de remorque (300) (St4).

3. Procédé selon la revendication 1 ou 2, **caractérisé en ce que** pour le contrôle de plausibilité du signal de demande (S1), il est contrôlé si un défaut (D) dans un dispositif de commande central (201) commandant les systèmes de freinage (200, 300) et/ou un dispositif de commande d'assistance (202) délivrant le signal de demande (S1) est présent, dans lequel un défaut (D) est notifié par l'intermédiaire d'un signal de diagnostic (SD1, SD2), dans lequel le signal de diagnostic (SD1, SD2) est élaboré dans un autodiagnostic (E) dans le dispositif de commande (201, 202) respectif (St2.1).

4. Procédé selon l'une quelconque des revendications précédentes, **caractérisé en ce que** pour le contrôle de plausibilité du signal de demande (S1), il est contrôlé si une erreur de connexion (V), par exemple un dépassement de temps CAN (V1), est présente (St2.4).

5. Procédé selon l'une quelconque des revendications précédentes, **caractérisé en ce que** pour le contrôle de plausibilité du signal de demande (S1), il est contrôlé si une accélération réelle de véhicule (aIst) effectivement présente et/ou une vitesse réelle de véhicule (vIst) se situent à l'intérieur d'une plage de tolérances (T) autour de l'accélération de consigne de véhicule (aSoll) ou la vitesse de consigne de véhicule (vSoll) (St2.2).

6. Procédé selon l'une quelconque des revendications précédentes, **caractérisé en ce que** pour le contrôle de plausibilité du signal de demande (S1), il est contrôlé si le signal de demande (S1) et/ou les signaux de commande (SZ, SA) délivrés par un dispositif de commande central (201) pour la commande électrique de modulateurs d'essieu (6, 10) du système de freinage (200, 300) respectif sont monotones (St2.3).

7. Procédé selon l'une quelconque des revendications précédentes, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) le système de freinage de véhicule tracteur (200) n'est pas commandé.

8. Procédé selon l'une quelconque des revendications précédentes, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) et/ou au cas où un dispositif de commande d'assistance (202) commandant de manière automatisée l'attelage de véhicule (1) par l'intermédiaire d'un signal de demande (S1) ne présenterait aucun défaut (D), le signal de commande de redondance de remorque (S3) est produit en fonction du signal de demande (S1).

9. Procédé selon l'une quelconque des revendications 1 à 7, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) le signal de commande de redondance de remorque (S3) est généré de telle sorte que l'attelage de véhicule (1) est amené à l'arrêt (SS) .

10. Procédé selon l'une quelconque des revendications précédentes, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) une régulation de glissement au freinage (BSR) est réalisée dans le système de freinage de remorque (300) à l'apparition d'un cas de glissement au freinage (BS) (St5).

11. Procédé selon l'une quelconque des revendications précédentes, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) seule une commande redondante électrique du système de freinage de remorque (300) (St4) par le signal de commande de redondance de remorque (S3) est permise.

12. Procédé selon l'une quelconque des revendications précédentes, **caractérisé en ce que** lors d'une modulation incomplète ou avec erreur de l'accélération de consigne de véhicule (aSoll) demandée de manière automatisée et/ou de la vitesse de consigne de véhicule (vSoll) demandée de manière automatisée (St3) une commande pneumatique redondante du système de freinage de remorque (300) par l'intermédiaire d'une pression de commande de remorque (pT) est permise en fonction d'un actionnement manuel (F), au cas où la demande de freinage redondante de manière pneumatique par l'intermédiaire de la pression de commande de remorque (pT) serait supérieure à la demande de freinage redondante de manière électrique par l'intermédiaire du signal de commande de redondance de remorque (S3).

13. Procédé selon l'une quelconque des revendications précédentes, **caractérisé en ce que** lors d'une mise en œuvre incomplète ou avec erreur de l'accélération de consigne de véhicule (aSoll) demandée de manière automatisée et/ou de la vitesse de consigne de véhicule (vSoll) demandée de manière automatisée (St3) ainsi que lors d'une panne d'une première source d'énergie (15a) une alimentation en énergie du système de freinage de remorque (300) s'effectue par l'intermédiaire d'une deuxième source d'énergie (15b).

14. Procédé selon la revendication 13, **caractérisé en ce que** lors d'une commande redondante de manière électrique du système de freinage de remorque (300) (St4), sur la base de laquelle une activation de feux de stop (16) dans la remorque (3) s'effectue par l'intermédiaire d'un signal de feu de stop (SW), le système de freinage de remorque (300) est simultanément alimenté en énergie par l'intermédiaire du signal de feu de stop (SW) .

15. Procédé selon la revendication 3 ou revendication 8, **caractérisé en ce que** le dispositif de commande d'assistance (202) ne délivre un signal de demande (S1) que lorsqu'une remorque (3) avec un système de freinage de remorque (300) a été identifiée.

16. Installation de freinage (100) pouvant être commandée électriquement pour un attelage de véhicule (1) pouvant être commandé de manière automatisée composé d'au moins un véhicule tracteur (2) et d'une remorque (3), en particulier adaptée à la mise en œuvre du procédé selon l'une quelconque des revendications précédentes, présentant au moins :
un système de freinage de véhicule tracteur (200) avec au moins un circuit de freinage de véhicule tracteur (A, B) et un système de freinage de remorque (300) avec au moins un circuit de freinage de remorque (C) pour le freinage de l'attelage de véhicule (1) par l'intermédiaire de freins de service de véhicule tracteur (5) et de freins de service de remorque (8),
une soupape de pédale de frein (7) pour la prédéfinition manuelle d'un signal d'actionnement (S2) électrique en fonction d'un actionnement manuel (F),
un dispositif de commande d'assistance (202) pour la prédéfinition automatisée d'un signal de demande (S1),
un dispositif de commande central (201) pour la délivrance de signaux de commande électriques (SZ, SA) à au moins un modulateur d'essieu de véhicule tracteur (6) dans le système de freinage de véhicule tracteur (200) et au moins un modulateur d'essieu de remorque (10) dans le système de freinage de remorque (300) en fonction du signal de demande (S1) ou du signal d'actionnement (S2),
une connexion enfichable de remorque (50) pour la transmission de signaux (SA, S3, SW) du véhicule tracteur (2) à la remorque (3),
**caractérisée en ce que**
un dispositif de surveillance (203) est prévu en outre, qui est disposé dans une ligne de données (49) menant au système de freinage de remorque (300) et qui est réalisé pour surveiller la modulation complète ou sans erreur du signal de demande (S1) demandé de manière automatisée et pour contrôler la plausibilité de celle-ci et pour délivrer un signal de redondance de remorque (S3) au système de freinage de remorque (300), lorsque la modulation ne s'effectue pas ou ne peut s'effectuer complètement ou sans erreur, afin de freiner l'attelage de véhicule (1) par l'intermédiaire de la remorque (3) et d'amener l'attelage de véhicule (1) dans un état sûr.

17. Installation de freinage (100) pouvant être commandée électriquement selon la revendication 16, **caractérisée en ce que** le dispositif de surveillance (203) est disposé dans une ligne de données (49) entre le dispositif de commande central (201) et un modulateur d'essieu de remorque (10) associé au système de freinage de remorque (300).

18. Installation de freinage (100) pouvant être commandée électriquement selon la revendication 17, **caractérisée en ce que** le dispositif de surveillance (203) est disposé dans le véhicule tracteur (1) et le signal de commande de redondance de remorque (S3) peut être transmis au système de freinage de remorque (300) par l'intermédiaire de la connexion enfichable de remorque (50).

19. Installation de freinage (100) pouvant être commandée électriquement selon l'une quelconque des revendications 16 à 18, **caractérisée en ce que** la connexion enfichable de remorque (50) présente une interface CAN (50a) et une interface d'alimentation (50b) ou une interface CPL (50c).

20. Installation de freinage (100) pouvant être commandée électriquement selon la revendication 19, **caractérisée en ce que** le dispositif de commande central (201), le dispositif de commande d'assistance (202) et le dispositif de surveillance (203) sont reliés à une première source d'énergie (15a) et le dispositif de surveillance (203) en plus ou exclusivement à une deuxième source d'énergie (15b) indépendante de la première source d'énergie (15a), dans laquelle le système de freinage de remorque (300) peut être alimenté en énergie par la première ou la deuxième source d'énergie (15a, 15b) par l'intermédiaire de la connexion enfichable de remorque (50), dans laquelle à cet effet la première source d'énergie (15a) et/ou la deuxième source d'énergie (15b) peuvent être reliées à l'interface d'alimentation (50b) ou l'interface CPL (50c).

21. Installation de freinage (100) pouvant être commandée électriquement selon l'une quelconque des revendications 16 à 20, **caractérisée en ce que** l'installation de freinage est une installation de freinage (100) pneumatique.

22. Attelage de véhicule (1), en particulier attelage de véhicule utilitaire (1), avec une installation de freinage (100) pouvant être commandée électriquement selon l'une quelconque des revendications 16 à 21, en particulier adapté à la mise en œuvre d'un procédé selon l'une quelconque des revendications 1 à 15.
